# EUROPÄISCHE PATENTANMELDUNG

(11) **EP 2 323 083 A1**
(43) Veröffentlichungstag der Anmeldung: **18.05.2011**
(21) Anmeldenummer: 09013309.1
(22) Anmeldetag: 21.10.2009
(51) Int. Cl.: G06Q 10/00

(54) **Technisches Klassifikationssystem**

(71) Anmelder: ecs Beratung & Service GmbH, 81241 München (DE)
(72) Erfinder: Sporer, Hans, Dr., 82256 Fürstenfeldbruck (DE); Schulte, Katharina, 81243 München (DE)
(74) Vertreter: Scheele, Friedrich

(57) **Zusammenfassung**

Die Erfindung betrifft ein Verfahren, ein System und ein Computerprogramm, sowie Anwendungen des Verfahrens zur Analyse von Daten mittels eines Computers zum automatisierten Neu-Erstellen einer Datenstruktur (DS) für informationstechnologische Objekte (10), wobei die Objekte (10) technische Bauteile (8) aus dem Maschinenwesen oder der Elektroindustrie repräsentieren und einem Unternehmen (I) zugeordnet sind. Dabei werden die zu strukturierenden Objekte (10) erfasst und anschließend einem Parsen unterworfen. Daraufhin werden technische Relationen zwischen den geparsten Objekten (10) zum Aufbau einer technischen Metrik erstellt. Aus der technischen Metrik wird die Datenstruktur (DS) abgeleitet.

## Beschreibung

Die Erfindung betrifft ein Verfahren zur computer-gestützten Analyse von Daten zum automatischen Neu-Erstellen einer Datenstruktur für informationstechnologische Objekte. Die informationstechnologischen Objekte repräsentieren technische Bauteile aus dem Maschinen- und Produktionswesen. Des Weiteren betrifft die Erfindung eine Anwendung des Verfahrens zur Zugriffssteuerung auf die Objekte und zur Fehlerkorrektur einer bestehenden Klassifikationsstruktur. Darüber hinaus betrifft die Erfindung ein System und ein Computerprogramm für das vorher spezifizierte Verfahren.

### Hintergrund der Erfindung

Die meisten Prozesse und Abläufe in Entwicklung und Produktion und auf anderen technischen Gebieten erfolgen heute computergestützt, um eine elektronische Verarbeitung der zugrundeliegenden Daten zu ermöglichen. Je nach Anwendung auf dem Gebiet des Maschinenbaus sind eine Vielzahl von unterschiedlichen computer-gestützten Produkten auf dem Markt bekannt, wie z. B. Lagerhaltungssysteme, Produktdatenmanagementsysteme (im Folgenden kurz: PDM-Systeme), Einkaufssysteme, Stücklistenverwaltungssysteme, CAD-Systeme, Zeichnungsarchive, Arbeitspläne, PPS-Systeme etc. Grundlage für diese Systeme ist eine Datenbasis, in der die technischen Objekte abgelegt sind.

Damit die technischen Systeme nun effizient und fehlerfrei funktionieren können, ist es erforderlich, eine fehlerfreie Zuordnung zwischen den real existierenden technischen Produkten oder Objekten und den informationstechnologischen Objekten, die in einer Datenbank abgelegt sind, bereitzustellen.

Insbesondere ist es wichtig, einen von Fehlern bereinigten Datenbestand bereitzustellen. Fehler können insbesondere dadurch entstehen, dass für ein und denselben Gegenstand (z. B. ein Produkt) mehrere informationstechnologische Objekte generiert sind, die denselben technischen Gegenstand referenzieren. Ebenso ist es möglich, dass die technischen Gegenstände mit unterschiedlichen Namen in das elektronische System aufgenommen worden sind, was vielfach zu immensen Folgefehlern mit hohen Kosten führt.

### Stand der Technik

Um nun eine möglichst gute Basis für solche elektronischen Systeme zu schaffen, ist es im Stand der Technik bekannt, Datensätze, die bereits in einer vorgegebenen bzw. bestehenden Datenstruktur klassifiziert sind, verbessert zu strukturieren bzw. einzuordnen.

So zeigt insbesondere die DE 10 2005 008 844 ein Verfahren und eine Vorrichtung zur computer-gestützten Klassifizierung von Daten. Das hier offenbarte Prinzip basiert auf einem stochastischen Ansatz und verarbeitet Häufigkeitsverteilungen für das Auftreten der zu klassifizierenden Objekte. Ein Nachteil dieses Verfahrens ist darin zu sehen, dass die Datenstruktur bereits zu Beginn der Verarbeitung vorgegeben sein muss und somit vom grundsätzlichen Aufbau nicht mehr veränderbar ist. Für technische Anwendungen, z. B. für elektronische Stücklistensysteme im Bereich der elektronischen Fertigung, zeigt die Erfahrung im industriellen Umfeld, dass der Prozess deutlich verbessert werden kann, indem eine für den jeweiligen technischen Anwendungsfall spezifisch ausgelegte Datenstruktur neu erstellt wird, ohne auf bisher existierende Datenstrukturen angewiesen zu sein.

### Darüber hinaus sind im Stand der Technik

Datenmanagementsysteme bekannt, um Datensätze in bestehenden Klassifikationsstrukturen zu klassifizieren. So zeigt beispielsweise die US-Anmeldung 20070299855 einen Ansatz, um unstrukturierte Daten über die Erfassung von Angaben zu deren Datenformat zu strukturieren.

### Aufgabe

Ausgehend von dem vorstehend erwähnten Stand der Technik hat sich die vorliegende Erfindung zur Aufgabe gestellt, einen Weg aufzuzeigen, mit dem informationstechnologische Objekte, die technische Bauteile oder Produkte aus dem Gebiet des Maschinenwesens oder der Elektronikindustrie repräsentieren, vollständig automatisch in eine neu zu erstellende Datenstruktur zu strukturieren, wobei technische Abhängigkeiten zwischen den Bauteilen berücksichtigt werden sollen. Darüber hinaus soll ein vollautomatisiertes Erstellen einer technischen Datenstruktur ermöglicht werden, bei dem Fehler durch Fehlklassifizierungen vermieden werden. Auch soll eine vereinfachte Suche nach den technischen Bauteilen ermöglicht werden.

### Allgemeine Beschreibung der Erfindung

Die vorstehend erwähnte Aufgabe wird durch das erfindungsgemäße Verfahren, durch die Anwendungen des Verfahrens, durch ein System und durch ein Computerprogramm nach den beiliegenden Patentansprüchen gelöst. Die Unteransprüche beschreiben weitere, vorteilhafte Ausführungsformen des Verfahrens.

Die in Zusammenhang mit dem Verfahren erwähnten Merkmale, Vorteile und vorteilhaften Ausgestaltungen sind ebenso auf die anderen beanspruchten Gegenstände (also auf das System und das Computerprogramm) zu übertragen und umgekehrt. Die funktionalen Merkmale des Verfahrens werden durch entsprechende Hardware-Bauteile eines Mikrochips gelöst, die die im Zusammenhang mit dem Verfahren beschriebenen Funktionalitäten aufweisen.

Im Folgenden werden die Begrifflichkeiten dieser Anmeldung näher erläutert.

Unter "Analyse" von Daten ist eine Datenverarbeitung auf einem Computer zum Zwecke der vollautomatischen Neu-Erstellung einer Klassen- bzw. Datenstruktur zu verstehen. Die Analyse umfasst das automatische oder computer-gestützte Einlesen der Daten über eine Schnittstelle, sowie die Verarbeitung der eingelesenen Daten anhand von vordefinierbaren Regeln und Parametern sowie Kriterien. Bei den Daten handelt es sich um technische Daten, insbesondere aus dem Gebiet des Maschinenwesens oder der Elektrotechnik. Andere Ausführungsformen der Erfindung können hier auch andere technische Anwendungsgebiete vorsehen.

Der Begriff "Neu-Erstellen" soll kennzeichnen, dass in der Regel eine neue Datenstruktur erstellt wird. Ebenso ist es jedoch auch möglich, dass bereits bestehende Datenstrukturen modifiziert werden, um an den aktuellen Anwendungsfall hin angepasst und ausgelegt werden zu können. Dabei ist jedoch wesentlich, dass die Beziehungen zwischen den Objekten stets neu generiert werden und dass die Objekte somit auch neu in die Datenstruktur (möglicherweise auch in eine bestehende) klassifiziert werden. Das Generieren der Datenstruktur umfasst alle Formen von Datenstrukturen, also auch Datenstrukturen, deren Einträge über Verweise verkettet sind, sowie Datenstrukturen in Form von Listen und Tabellen mit entsprechenden Unterstrukturen. Ebenso sind in der Datenstruktur Tags oder Pointer vorgesehen, um auf einen Eintrag in der Datenstruktur verweisen zu können.

Unter "informationstechnologischen Objekten" sollen im Rahmen dieser Erfindung alle Objekte verstanden sein, die in die zu erstellende Datenstruktur strukturiert bzw. klassifiziert sind und technische Bauteile oder Gegenstände aus dem technischen Produktionswesen repräsentieren. Üblicherweise sind die Objekte einer Instanz zugeordnet. Bei der Instanz handelt es sich üblicherweise um eine Organisationseinheit, wie z. B. ein Unternehmen, ein Teil des Unternehmens, Betriebszusammenschlüsse wie z. B. eine Produktionseinheit oder eine Entwicklungsabteilung. Die Objekte sind in einer Datenbank gespeichert. Die Datenbank kann nach unterschiedlichen Schemata strukturiert sein. So kann die Datenbank relational, objektorientiert, netzwerkartig und/oder hierarchisch oder entsprechend der Neben- bzw. Mischformen strukturiert sein.

Das "Erfassen" der zu strukturierenden Objekte erfolgt üblicherweise vollautomatisch über eine dafür vorgesehene Schnittstelle. Üblicherweise werden die Objekte über eine Schnittstelle aus anderen Systemen oder Speichern eingelesen. Ebenso können die Objekte über eine bereitgestellte Datenübertragungsverbindung von anderen Einheiten eingelesen werden. In speziellen Ausführungsformen ist es möglich, hier auch ein semi-automatisches Vorgehen vorzusehen, so dass die erfassten Objekte durch eine Benutzerinteraktion bestätigt werden müssen.

Das "Parsen" der Objekte ist als Analyse der erfassten Objekte zu verstehen. Je nach Ausführungsform umfasst der Vorgang des Parsens ein semantisches oder syntaktisches Parsen. Dazu werden die erfassten Objekte im Hinblick auf vordefinierbare Regeln analysiert, um die Daten zu extrahieren, die für die technische Metrik relevant sind. In der bevorzugten Ausführungsform umfasst der Vorgang des Parsens auch das Erstellen einer Log-Datei, um die extrahierten Informationen und das Ergebnis des Parsens zu speichern und auch für spätere Analysen verfügbar zu machen. Der Parser bzw. das Parsen kann nach unterschiedlichen Techniken gesteuert werden, etwa als Top-Down-Parser, als Bottom-Up-Parser. Darüber hinaus kann er mit unterschiedlichen Implementierungstechniken betrieben werden (z. B. rekursiv absteigend oder rekursiv aufsteigend etc.).

Bei den "technischen Relationen" handelt es sich um semantische Beziehungen zwischen den Objekten, wobei die Beziehungen technische Abhängigkeiten zwischen den Gegenständen oder technischen Bauteilen repräsentieren. Die technischen Relationen werden definiert, um daraus eine technische Distanz zwischen den Objekten zu messen und um eine technische Metrik zu erstellen. Deshalb kann das Merkmal "Erstellen von technischen Relationen" auch ein "Messen eines Abstandes oder einer Distanz zwischen den Objekten" umfassen. Der Begriff "technische Metrik" kann auch als Netz, insbesondere als semantisches Netz, bezeichnet werden, um die Vernetzungen bzw. Beziehungen zwischen den technischen Gegenständen zu repräsentieren. Dabei werden im Moment des Netzaufbaus instanzenspezifische Distanzen und Adjazenzmatrizen berechnet. Dies erfolgt gemäß einer vorteilhaften Ausführungsform der Erfindung auf Basis einer instanzenspezifischen Parametrierung.

Das Merkmal "Aufbau/Modifikation einer technischen Metrik" umfasst das Erstellen eines semantischen Netzes mit wohldefinierten Abstandsbeziehungen zwischen den Objekten, die auf den technischen Gegebenheiten des Produktionsbetriebes basieren. Für das Erstellen der technischen Metrik wird ein semantisches Ähnlichkeitsmaß für jedes Objekt zu jedem anderen Objekt in der Datenmenge gemessen, so dass man eine Adjazenzmatrix für die Datenmenge erhält. Die Messung erfolgt auf Basis der Summe der zwischen den Bedeutungsträgern der Objekte existierenden Relationen. Das Ergebnis der Berechnung lässt sich auf verschiedene Arten parametrieren. Im Folgenden seien drei Methoden näher beschrieben:
1. Einzelne oder mehrere Relationen können aus der Betrachtung ausgeklammert werden. Beispielsweise kann für eine rein taxonomische Betrachtung nur die Relation [A ist Spezialfall von B] verwendet werden.
   Die Berechnung kann sich auf die Bezeichnungen der Objekte beschränken oder weitere Merkmale (Material, Normen, Ausführungsformen etc.) hinzuziehen und so den Detaillierungsgrad der Betrachtung der Objektmenge definieren (indirekte Relationen).
   Zum Beispiel: Zylinderschrauben, mit der gemeinsamen Norm ISO4762 (Zylinderschrauben mit Innensechskant) haben zwischen sich eine höhere semantische Nähe als eine Zylinderschraube ISO4762 und eine andere mit DIN7984 (Zylinderschraube mit Innensechskant, niedriger Kopf)
2.Einzelne Relationen können gegenüber anderen Relationen stärker gewichtet werden. So kann es für Anwendungen im Einkauf sinnvoll sein, die Relation [A ist Bestandteil von B] geringer zu gewichten, [A ist Spezialfall von B] hingegen stark, während es für Stücklisten genau umgekehrt ist. Bei der Auswahl von Vorzugsbauelementen in der Konstruktion können wiederum die Relationen [A ist Norm für B] oder [A ist Material von B] eine sehr viel höhere Bedeutung haben.
   Gegebenenfalls können auch bestimmte technische Merkmale (z.B. die Norm) höher gewichtet werden, als die Begrifflichkeit selbst, um so die Auswirkung uneindeutiger Begriffe zu verringern.
   Auch ist es möglich, dass eine instanzenspezifische Relation höher gewichtet wird, um so eine sehr spezielle Sichtweise einzubringen. (A ist Beistellteil für B)
3. Es ist möglich, das Abklingen des Ähnlichkeitsmaßes für indirekte Relationen zu definieren. So trifft es zwar zu, dass sowohl ein Ventilteller als auch ein Ventil eine gewisse semantische Nähe zur Fluidtechnik aufweisen, allerdings wird man beim Ventilteller eher eine geringere semantische Nähe einstellen wollen (Ähnliches gilt für "Trimmwiderstand" und "Elektronik" und "passives Bauelement" und "Elektronik").

Ein Aspekt der Erfindung zielt darauf ab, die Datenstruktur aus der technischen Metrik zu erstellen. Grundsätzlich kann jede technische Relation zwischen den Objekten bzw. bestimmte Ausprägungen von deren Merkmalen in einer Datenstruktur abgebildet werden. Für die Suche nach bestimmten Merkmalen und Relationen ist eine Datenbankabfrage ausreichend. Soll hingegen ein neues Strukturierungs- oder Ordnungskriterium aufgebaut werden, so kann auf Basis der Adjazenzmatrix eine Clusteranalyse durchgeführt werden, die die Informationsobjekte nach ihrer semantischen Nähe, d.h. auf Basis der technischen Relationen in Verbindung mit einer instanzenspezifischen Bewertung gruppiert.

Dabei kann grundsätzlich jeder Clusteralgorithmus, der auf Basis einer Adjazenzmatrix durchführbar ist, gewählt werden. Eine bevorzugte Ausführungsform ist das hierarchischagglomerative Clustering mit einer Vorgabe für die Anzahl der Zielcluster. Denkbar ist auch eine Ausführungsform, bei der das Clustering in mehreren Schritten unter Verwendung verschiedener Verfahren ausgeführt und hierdurch sukzessive optimiert wird.

In einer weiteren Ausführungsform findet zunächst ein (grobes) Clustering auf Basis der Bezeichnungen statt. Danach erfolgt eine Optimierung mit Hilfe weiterer Bedeutungsträger, die dem Objekt zugeordnet sind.

Die Datenstruktur besteht in der Zuweisung eines Identifikators (ID) des Informationsobjektes zu einer (im Laufe des Algorithmus generierten) Cluster-ID.

Bauteile können alle technischen Bauteile sein, die im Rahmen eines Produktions- oder Konstruktionsvorganges benötigt und verarbeitet werden. Diese Bauteile werden im Folgenden auch Gegenstände genannt, um zu verdeutlichen, dass damit nicht nur zu verarbeitende Bauteile umfasst sein sollen, sondern auch Ausgangsmaterialien und Grundelemente, wie z.B. Platinen und Wafer bei der Chipherstellung. Weitere Beispiele für Bauteile und Gegenstände sind z. B.: "Ventil", "Ventileinsatz", "Rückschlagventil", "Ventilteller", "Magnetventil" etc.

Beispiele für technische Relationen sind: "Ist Teil von", "Ist Bestandteil der Norm DIN ...", "Ist Fertigungsverfahren für", "Ist oberflächenbearbeitet mit", "gehört zur Gruppe der ...", etc.

In den oben erwähnten Beispielen kann eine technische Metrik beispielsweise sein: "Dichtungssatz gehört zu Ventil" oder "Rückschlagventil ist Spezialform eines Ventils", etc. Der Begriff der technischen Metrik definiert also in mathematischem Sinne einen Abstandsbegriff zwischen den Elementen. Es liegt somit auf der Hand, dass die technische Metrik sehr stark abhängig von dem jeweiligen Einsatzgebiet in dem Unternehmen bzw. in der jeweiligen Instanz ist. Dabei ist es möglich, dass jede Instanz, also insbesondere jede Unternehmenssparte, eigene Regeln hat, um diese Beziehungen abzubilden. In einer bevorzugten alternativen Ausführungsform der Erfindung ist es vorgesehen, dass jede Instanz zwar dieselben Regeln aber dafür eigene Bewertungsmaßstäbe für die Metrik hat (dies wird vorzugsweise über Parameter implementiert, mit denen die Relationen gewichtet werden).Je nach Branche gibt es jedoch auch Regeln, die unternehmensübergreifend definiert werden können und somit für mehrere Unternehmen gelten. Beide Arten von Regeln werden nach der erfindungsgemäßen Lösung berücksichtigt und modelliert. Eine Regel könnte beispielsweise für den Begriff "Ventil" darauf gerichtet sein, nur die Objekte mit technischen Relationen zu "Ventil" erfassen, die für die Fluidtechnik relevant sind.

Ein wesentlicher Aspekt der vorliegenden Erfindung ist darin zu sehen, eine Möglichkeit bereitzustellen, mit der die technischen Gegenstände eines Unternehmens und deren Beziehungen zueinander informationstechnologisch abgebildet werden können. Wichtig ist dabei, dass die technischen Gegebenheiten direkt und vollständig in das informationstechnologische System übernommen und modelliert werden können.

Ein wesentlicher Kerngedanke besteht dabei darin, dass auch die unternehmensspezifischen Regeln und Gegebenheiten informationstechnologisch abgebildet werden können. Das bedeutet, dass die erfindungsgemäß strukturierten Daten auch nach den unternehmensspezifischen Regeln und somit je nach Strukturierungseinheit unterschiedliche (weiter) verarbeitet werden. So kann es eingestellt sein, Daten in einer ersten Strukturierungseinheit der erstellten Datenstruktur anders zu formatieren und/oder zu verarbeiten als Daten in einer zweiten Strukturierungseinheit. Beispielsweise werden Objekte, die der Strukturierungseinheit "...ist oberflächenbearbeitet mit .." in der Metallverarbeitung zugeordnet sind nochmals subklassifiziert in " gehärtet", "plasmabeschichtet", "ionenstrahlbeschichtet" etc. In den unterschiedlichen Strukturierungseinheiten und/oder Subklassen können dann unterschiedliche Methoden der Datenverarbeitung (in Abhängigkeit von der vorhergehenden semantischen Analyse) eingesetzt werden. Allgemein formuliert können die semantischen Relationen elektronisch abgebildet und dann spezifisch (weiter) verarbeitet werden, so dass z.B. ein elektronisches Beschaffungssystem auf dem Gebiet des Maschinenwesens für den Gegenstand "Ventil" nur solche Relationen und Objekte in die technische Metrik aufnehmen, die für die jeweilige Abteilung relevant sind, wie z. B. "Rückschlagventil", "Membransicherheitsventil", "Kugelhahnventil", etc. Die Begriffe, die beispielsweise gemäß dem üblichen deutschen Wortschatz den Begriff "Ventil" zugeordnet werden können, wie z. B. "Dampf ablassen", "Wut", "Wut aufstauen", etc. werden dabei nicht berücksichtigt.

Die im Stand der Technik häufig verwendeten stochastischbasierten Methoden, die auf dem kompletten deutschen Wortschatz aufbauen, werden bei dem hier vorgeschlagenen Verfahren nicht eingesetzt, da sie nicht instanzen-spezifisch sind und von daher nicht die technischen Gegebenheiten in dem Unternehmen modellieren und abbilden können. Im Gegensatz dazu sollen die technischen Relationen so definiert sein, dass alle instanzen-spezifischen und entscheidenden Wirkmechanismen, Prozesse und Beziehungen im Unternehmen erfasst werden.

Mit anderen Worten ist die neu erstellte Datenstruktur eine informationstechnische Modellierung der technischen Gegebenheiten in dem jeweiligen Unternehmen bzw. in der jeweiligen Unternehmenseinheit. Damit findet indirekt eine Selektion von für das Unternehmen und die Gegenstände relevanten Daten statt. Damit wird das erstellte semantische Netz nur in den Bereichen detaillierter modelliert, strukturiert und dargestellt, wo es für das Unternehmen auch relevant ist. Mit anderen Worten wird die Betrachtungsebene nur dort vertieft, wo unternehmensspezifisch notwendig.

Gemäß einer Ausführungsform der vorliegenden Erfindung läuft das Verfahren vollautomatisch ab, so dass keine Benutzerinteraktion notwendig ist. Damit können Fehler vermieden werden, die auf eine unzureichende Datenerfassung zurückzuführen sind. Darüber hinaus kann das Verfahren deutlich schneller ausgeführt werden. Insbesondere werden folgende Verfahrensschritte automatisch ausgeführt: Das Erfassen der zu strukturierenden Objekte, das Parsen und das Bewerten der technischen Relationen auf Basis instanzenspezifischer Regeln und Parameter. In einer alternativen Ausführungsform ist es jedoch auch möglich, Teile der vorstehend genannten Verfahrensschritte semi-automatisch auszuführen, indem auf eine Benutzerinteraktion hin der automatisch generierte Vorschlag erst durch einen Benutzer bestätigt werden muss. Beispielsweise wäre dies denkbar, falls neue technische Relationen und/oder neue Objekte der Datenstruktur hinzugefügt werden sollen.

Gemäß einer weiteren Ausführungsform der Erfindung sind aus der technischen Metrik automatisch Objektklassen ableitbar. Mit anderen Worten können Gruppen bzw. Klassen von Objekten gebildet werden. Als Beispiel sei hier die Klasse aller Ventile genannt. Unter die Objektklasse der Ventile fallen also neben Rückschlagventilen ebenso Magnetventile oder Kugelhahnventile. Darüber hinaus ist es möglich, eine Hierarchie von Objekten und/oder eine Hierarchie von Objektklassen zu generieren. Die Hierarchie kann durch unterschiedliche Schemata generiert sein. Beispielsweise kann eine Ist-Teil-von-Hierarchie oder eine Gehört-zu-Hierarchie vorgesehen sein. Gemäß einer bevorzugten Ausführungsform wird die generierte technische Metrik auch auf einer Benutzer-Schnittstelle als Ergebnis dargestellt. Dies erfolgt üblicherweise in grafischer Form, insbesondere in der Art eines gerichteten Graphen. Dabei können die Objektklassen und Hierarchien von Objekten und/oder von Objektklassen sowie technische Cluster hervorgehoben dargestellt werden. Die Hervorhebung kann durch unterschiedliche Farbgebungen auf der grafischen Benutzeroberfläche oder durch andere Gestaltung (andere Linienart: gepunktet/gestrichelt) erfolgen.

Der Aufbau der technischen Metrik kann ein Clustering umfassen. Damit können Schwerpunkte für bestimmte Objektgruppen gebildet werden. Für das Clustering können unterschiedliche Techniken angewendet werden. Neben einer semantischen Ähnlichkeitsanalyse können hier auch statistische Methoden und eine Kombination der gleichen eingesetzt werden. Dabei ist es auch möglich, im Vorfeld Angaben der Cluster zu machen. So kann beispielsweise eine minimale und eine maximale Anzahl von Clustern definiert werden, um eine sinnvolle Klassifizierung für das jeweilige Unternehmen erreichen zu können.

Output des erfindungsgemäßen Verfahrens ist zumindest die technische Metrik (z. B. in grafischer Darstellung). In komplexeren Ausführungsformen können hier noch weitere Metadaten und zusätzliche Informationen als Ergebnis bereitgestellt werden. Das Ergebnis, also insbesondere die technische Metrik, wird in einem elektronischen Speicher abgelegt und ist z. B. über das Internet oder ein anderes Netzwerk zugreifbar. Die zu strukturierenden Objekte können mit der technischen Metrik zusammen in demselben Datenspeicher abgelegt sein. Ebenso ist es möglich, die zu strukturierenden Objekte, die grundsätzlich als Eingangsgröße für das erfindungsgemäße Verfahren dienen, in einer separaten Datenhaltung bereitzustellen. Dies ist beispielsweise bei sicherheitskritischen Anwendungen sinnvoll.

Als Ergebnis des erfindungsgemäßen Verfahrens kann zusätzlich eine grafische schematische Repräsentation der erstellten Datenstruktur umfasst sein. Mit anderen Worten werden die zu strukturierenden Objekte, die erfindungsgemäß automatisch in eine Datenstruktur klassifiziert worden sind, zur leichteren Benutzung und Navigation in der Datenstruktur für den Anwender in schematischer Weise auf einer grafischen Benutzeroberfläche dargestellt werden. Durch Betätigen von interaktiven Schaltelementen auf der Benutzeroberfläche kann der Benutzer bestimmte Elemente aus der Datenstruktur auswählen und auf diese direkt zugreifen.

Gemäß einem Aspekt der Erfindung können aus der technischen Metrik die technischen Cluster berechnet werden. Dies erfolgt iterativ mit sukzessiver Anpassung der Parameter.

Gemäß einem weiteren Aspekt umfasst das Verfahren eine Ähnlichkeitsanalyse auf Basis der technischen Metrik. Die Ähnlichkeitsanalyse ist vorzugsweise semantisch und basiert auf den technischen Relationen zwischen den Gegenständen.

Gemäß einem Aspekt der Erfindung wird die technische Metrik so generiert, dass automatisch Objektdubletten identifiziert und optional auch gleich gelöscht oder für ein Löschen vorbereitet werden. Um die Sicherheit an dieser Stelle zu erhöhen und um Folgefehler aufgrund einer fehlerhaften Löschung zu vermeiden, kann hier auch eine Benutzerbestätigung erforderlich sein, die über ein entsprechendes Signal abgefragt wird. Damit kann sichergestellt werden, dass ein und derselbe technische Gegenstand nicht mehrfach durch informationstechnologische Objekte repräsentiert ist. Mit diesem Merkmal können Fehler reduziert werden.

Gemäß einem Aspekt der Erfindung ist es vorgesehen, dass auf Basis der technischen Metrik eine Distanz zwischen den Objekten berechnet wird. Bei der Distanz handelt es sich üblicherweise um eine semantische Distanz, die den Abstand zwischen den Gegenständen in technischer Hinsicht repräsentieren soll. Damit kann die grafische Gestaltung der technischen Metrik sehr schnell und einfach für einen Anwender erfasst werden.

Bei der Generierung von komplexen Datenstrukturen mit großen Datenbeständen ist es vorteilhafterweise vorgesehen, dass eine Priorisierung hinsichtlich der Objekte vorgesehen ist. Mit anderen Worten werden zunächst und beispielsweise an hervorgehobener Stelle die Objekte dargestellt, die äußerst relevant für den jeweiligen Anwendungsfall im Unternehmen sind. Danach folgen die weniger relevanten Objekte. Die wichtigen Informationen können somit schneller und einfacher dargestellt und verarbeitet werden. Üblicherweise sind die Distanz und die Priorisierung abhängig von dem jeweiligen Anwendungsfall und von dem jeweiligen Unternehmen. Damit wird es möglich, unterschiedliche Distanzen und unterschiedliche Priorisierungen sowie unterschiedliche technische Metriken für unterschiedliche Organisationseinheiten des Unternehmens zu definieren und vorzusehen.

Üblicherweise umfasst das erfindungsgemäße Verfahren Schnittstellen, insbesondere eine Benutzer-Schnittstelle, über die ein Anwender Eingaben in unterschiedlichen Formaten eingeben kann. Insbesondere kann er hier die Parameter für die Distanz und/oder Parameter für die Bestimmung der Anzahl der Cluster und/oder für instanzen-spezifische Regeln eingeben. Darüber hinaus ist auch eine grafische Oberfläche bereitgestellt, über die das Ergebnis (in der Regel in der Form eines Graphen) dargestellt werden kann. Darüber hinaus sind natürlich noch je nach Anwendungsfall unterschiedliche Schnittstellen zu anderen Systemen denkbar.

Gemäß einem Aspekt der Erfindung umfasst das erfindungsgemäße Verfahren eine Auswahl, so dass nur die relevanten Objekte mit deren Beziehungen in die technische Metrik aufgenommen werden. Dabei werden vordefinierbare Kriterien für die Selektion angewandt. Dies dient dazu, dass die technische Metrik nicht unnötig komplex werden muss.

Gemäß einem wichtigen Aspekt der Erfindung ist es vorgesehen, dass die technische Metrik dynamisch erweiterbar ist. Mit anderen Worten wird die technische Metrik direkt angepasst, sobald sich eine Änderung an den technischen Gegebenheiten ergibt. Wird beispielsweise eine neue Projektgruppe mit einer neuen Metallverarbeitung aufgenommen, so wird die entsprechende technische Metrik um die hergestellten Objekte und die jeweilige Maschine erweitert.

Auch ist es möglich, das Verfahren iterativ anzuwenden. Es können sozusagen mehrere Durchläufe zum Aufbau der technischen Metrik ausgeführt werden. Die Iteration hat folgende Zielsetzungen:
1. Bezüglich eines verwendeten Algorithmus: Zur Verringerung der benötigten Rechenleistung kann es sinnvoll sein, zunächst weiter oben in der Objekthierarchie anzusetzen und erst dann auf Einzelmaterialebene weiterzuarbeiten.
2. Bezüglich der Optimierung: Hierdurch wird es dem Benutzer ermöglicht, die instanzenspezifischen Parameter ggf. anzupassen.

Die technischen Relationen sollen die Gegebenheiten und Beziehungen der Objekte in dem Unternehmen möglichst optimal abbilden. Dazu können folgende Beispiele für Relationen definiert werden:
- hat technische Norm DIN ...(z.B. "Zylinderschraube hat Norm ISO 4762")
- ist oberflächenbearbeitet mit (z.B. "Kühlkörper ist blaugebeizt")
- ist Prüfungsmethode für (z.B. "Shore ist Prüfverfahren für Härte")
- hat technische Anforderung für (z.B. "Spanneisen muss verstellbar sein")
- ist Fertigungsverfahren für (z.B. "Aluminiumguss ist Fertigungsverfahren für Gehäuse")
- ist Ausführungszusatz für (z.B. "Dichtung ist Ausführungszusatz für Erdungshülse" - Signalwort "mit")
- hat Materialzusammensetzung von.

Gemäß eines wesentlichen Aspekts der vorliegenden Erfindung kann das Verfahren auch als Steuerung für Prozesse im Bereich z. B. der Produktionssteuerung, des Einkaufs, der Lagerhaltung, der Arbeitsvorbereitung, der Instandhaltung und/oder der Logistik dienen. Ebenso liegt eine wichtige Anwendung im Bereich der Entwicklungs- und Konstruktionsprozesse, wobei ein besonderer Vorteil darin liegt, dass auch Vorzugsbauelemente in dem elektronischen Modell entsprechend abgebildet werden können. Dabei können die Vorzugsbauelemente entweder in ein eigenes Cluster gruppiert werden oder es können entsprechende Regeln definiert werden, die den Vorzugsbauelementen eine jeweils kürzere semantische Distanz zuordnet.

Die vorliegende Erfindung bezieht sich auch auf die Anwendung des vorstehend beschriebenen Verfahrens zur Steuerung des Zugriffs auf Objekte. Ebenso kann es zur Speicherung der Objekte in dem Speicher oder in einer Datenbank verwendet werden. Eine andere Anwendungsmöglichkeit ist darin zu sehen, dass eine Datenstruktur bereits erstellt worden ist und dass die in der bestehenden Datenstruktur klassifizierten Daten jedoch neu strukturiert werden sollen. Es soll also eine Bereinigung bzw. eine Korrektur einer bestehenden Datenstruktur ausgeführt werden. Dies wird erreicht, indem die Objekte aus der alten Datenstruktur ausgelesen und erfasst werden und anschließend einem Parsen unterworfen werden. Daraufhin werden technische Relationen zwischen den geparsten Objekten zum Aufbau einer neuen technischen Metrik neu berechnet bzw. bewertet, wobei die technischen Relationen auf unternehmens-spezifischen Regeln für die technischen Gegenstände basieren. In einer vorteilhaften Ausführungsform der Erfindung kann es durchaus vorgesehen sein, dass in der zu erstellenden technischen Metrik (die auch als semantisches Lexikon verwendet werden kann) bereits (z.B. grundsätzliche) technische Relationen existieren. Zu einem späteren Zeitpunkt erfolgt dann eine Bewertung/Metrik dieser Relationen basierend auf den instanzenspezifischen Gegebenheiten.

Eine weitere Lösung der erfindungsgemäßen Aufgabe ist in dem System zur Analyse von Daten zum Zwecke der Neu-Erstellung einer Datenstruktur zu sehen. Das System umfasst neben einer Datenbank eine Schnittstelle zur Darstellung der technischen Metrik.

Gemäß einer bevorzugten Ausführungsform umfasst das System darüber hinaus eine Erfassungseinheit, die zum Erfassen der zu strukturierenden Objekte über eine Schnittstelle ausgebildet ist. Darüber hinaus ist ein Parser vorgesehen, um die erfassten Objekte zu analysieren. Darüber hinaus ist auch eine Strukturierungseinheit umfasst, die zur Strukturierung und Klassifizierung der Objekte in eine Datenstruktur unter Berücksichtigung der technischen Metrik bestimmt ist.

### Kurze Beschreibung der Figuren

In der nachfolgenden detaillierten Figurenbeschreibung werden Ausführungsbeispiele in Hinblick auf die Figuren mit deren Vorteilen, alternativen Ausführungsformen und Merkmalen näher erläutert.

Dabei zeigen:

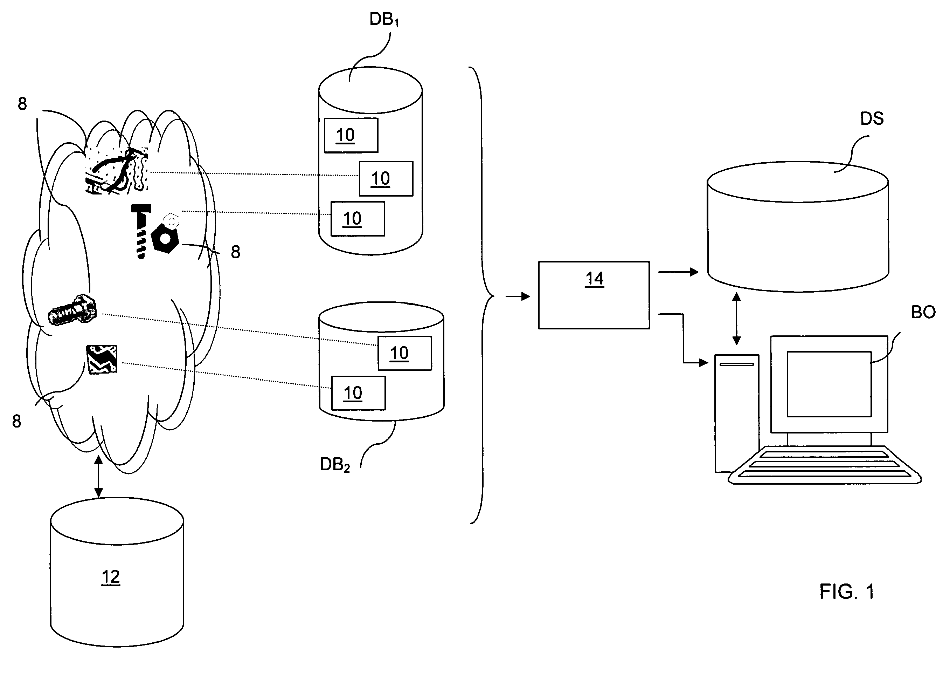

Fig. 1 eine schematische Prinzipdarstellung von Elementen des erfindungsgemäßen Systems gemäß einer bevorzugten Ausführungsform und
Fig. 2 ein Ablaufdiagramm von Verfahrensschritten gemäß einer bevorzugten Ausführungsform der Erfindung.

### Detaillierte Beschreibung der Figuren

Ein hauptsächliches Anwendungsgebiet der vorliegenden Erfindung betrifft eine Stammdatenverwaltung auf dem Gebiet des Maschinenwesens. Die Kernproblematik ist dabei darin zu sehen, dass beispielsweise alle technischen Gegenstände für die Erstellung eines Getriebes, wie Wellen, Muttern, Schrauben, Bolzen etc. in ein elektronisches System übertragen werden müssen, um weiterverarbeitet zu werden. Damit wird es möglich, elektronische Stücklisten für das Beschaffungswesen bzw. für die Logistik zu erstellen. Selbstverständlich sind hier auch andere Anwendungen möglich, wie z. B. die Materialprüfung zur Erfassung und Messung von Materialeigenschaften der technischen Gegenstände.

Ein wesentlicher Kerngedanke der vorliegenden Erfindung ist darin zu sehen, dass die Ausrichtung der Produktionsstätte (also des Unternehmens bzw. des Betriebes) von wesentlicher Bedeutung für den Aufbau einer elektronischen Datenstruktur DS ist. Das Unternehmen wird in dieser Anmeldung deshalb unter dem Oberbegriff Instanz I zusammengefasst. Üblicherweise hat ein Unternehmen, das auf die Getriebeerstellung spezialisiert ist, andere Taxonomien und andere technische Gegenstände 8, wie beispielsweise ein Unternehmen, das im Bereich der Fluidtechnik tätig ist und Ventile produziert.

Ein wesentlicher Kerngedanke der vorliegenden Erfindung ist deshalb darin zu sehen, dass die neu zu erstellende Datenstruktur DS instanzen-spezifisch ist und speziell auf die Gegebenheiten des Unternehmens bzw. des technischen Bereiches abgestellt werden kann. Dazu greift das System auf eine Regeldatenbank 12 zu, die eng mit den technischen Objekten 10 gekoppelt ist und eine Schnittstelle zu einer Strukturierungseinheit 14 hat, die Teil des Systems ist.

Eine erste Aufgabenstellung, die mit der Erfindung gelöst wird, ist darin zu sehen, dass die realen technischen Bauteile oder Gegenstände 8 (wie also Ventile, Bolzen, Muttern etc.) in dem elektronischen System modelliert werden müssen, so dass die Gegenstände 8 über ihnen jeweils zugeordnete Objekte 10 repräsentiert sind. Dabei handelt es sich vorzugsweise um eine bijektive 1:1-Zuordnung, so dass genau einem technischen Gegenstand 8 genau ein technisches Objekt 10 zugeordnet ist.

Die technischen Objekte 10 können in einer Datenbank DB oder in mehreren, unterschiedlichen Datenbanken DB₁, DB₂, DBₙ gespeichert sein.

Die technischen Objekte 10 werden dann zusammen mit Regeln, die in der Regeldatenbank 12 abgelegt sind, von einer Erfassungseinheit erfasst und an die Strukturierungseinheit 14 weitergegeben.

Die Strukturierungseinheit 14 ist das zentrale Element der erfindungsgemäßen Lösung. Sie dient dazu, die zu strukturierenden Objekte 10 in die zu erstellende Datenstruktur DS zu klassifizieren, einzusortieren bzw. zu gruppieren. Dabei kann es gemäß einer alternativen Ausführungsform der Erfindung durchaus vorgesehen sein, dass die zu generierende Datenstruktur bereits "vorbefüllt" ist (z.B. mit grundsätzlichen Relationen und Objekten). Grundsätzlich ändern sich die Relationen jedoch nicht mit der Instanz I, sondern modifiziert werden nur die Parameter, nach denen die Regeln bewertet werden.

Gemäß einer bevorzugten Ausführungsform ist es zusätzlich vorgesehen, dass die erstellte Datenstruktur DS zusätzlich noch auf schematische Weise auf einer Benutzeroberfläche BO an einem Computer eines Anwenders dargestellt wird. Damit kann der Anwender sehr schnell und leicht eine Übersicht über die erstellte Datenstruktur DS erhalten und die wesentlichen Beziehungen zwischen den technischen Objekten 10 erkennen.

Gemäß einer weiteren bevorzugten Ausführungsform ist es vorgesehen, dass ein Navigationsmittel bereitgestellt wird, mit dem ein Anwender auf der Benutzeroberfläche BO in der schematisch dargestellten Datenstruktur DS navigieren kann. Mit anderen Worten kann ein Benutzer durch eine entsprechende Benutzereingabe (z. B. Mausklick, Tastaturbetätigung, etc.) ein Element der schematisch dargestellten Datenstruktur auswählen. Falls das Navigationsmodul aktiviert worden ist, kann daraufhin ein Fenster auf der Benutzeroberfläche BO aufgehen, über das der Anwender gefragt wird, ob ein automatischer Zugriff auf das ausgewählte Element in der Datenstruktur DS ausgeführt werden soll. Auf eine entsprechende Benutzereingabe kann der Anwender diese Frage beantworten bzw. den Zugriff bestätigen oder ablehnen. Nach einer Bestätigungseingabe des Benutzers wird daraufhin automatisch der Zugriff auf die Datenstruktur DS zum Zugriff auf das ausgewählte Element ausgeführt.

In komplexeren Ausführungsformen ist es darüber hinaus noch möglich, zusätzliche Meta-Informationen auf der Benutzeroberfläche BO anzuzeigen. Die Meta-Informationen beziehen sich beispielsweise auf verwandte Objekte 10, die in enger semantischer Beziehung zu dem ausgewählten Objekt 10 stehen. Auch ist es möglich, jeweils die übergeordnete Gruppe des ausgewählten Objektes 10 darzustellen.

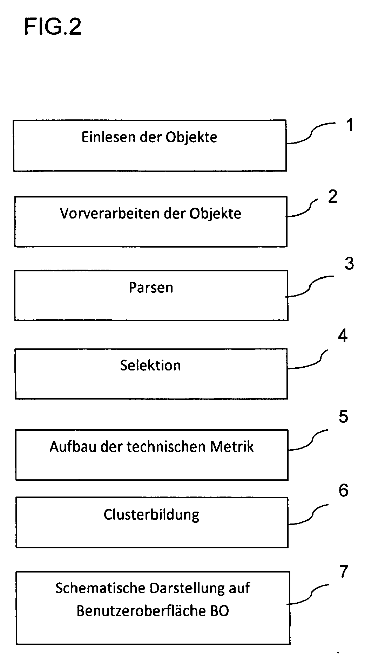

Im Folgenden wird ein typischer Ablauf des erfindungsgemäßen Verfahrens gemäß einer bevorzugten Ausführungsform im Zusammenhang mit Fig. 2 geschildert.

In einem ersten Schritt 1 werden die Objekte 10 üblicherweise aus unterschiedlichen Datenquellen DBᵢ über eine Schnittstelle eingelesen. Das Einlesen erfolgt vollautomatisch und kann nach bestimmten vordefinierbaren Parametern konfiguriert sein. So ist es beispielsweise möglich, hier bereits eine Selektion auszuführen und nur bestimmte Objekte 10 einzulesen, während andere Objekte nicht erfasst werden sollen. Auch wäre es beispielsweise einstellbar, nur die Objekte 10 aus einer bestimmten Datenquelle DB einzulesen und alle andren Objekte aus anderen Datenquellen DB nicht zu berücksichtigen. Dazu sind Kommunikationsverbindungen zwischen der Datenbank DB und der Strukturierungseinheit 14 des Systems vorgesehen. Es kann sich dabei um das Internet oder um andere Netzwerke, wie beispielsweise Client-Server-Architekturen, handeln.

In einer vorteilhaften Ausführungsform der Erfindung werden die Objekte 10 nicht direkt aus den Datenquellen DB eingelesen, sondern indirekt über parallele Systeme, wie z. B. aus ERP(Enterprise Resource Planning)-Systemen.

In komplexeren Ausführungsformen ist es vorgesehen, die Akquisition der Daten bzw. der technischen Objekte 10 vollautomatisch auszuführen und dazu einen Zugriff auf unterschiedliche Datenbasen zu steuern. Dabei sind technische Dokumente, Datenblätter und sonstiges Material über interne Netzwerke (Intranet) sowie über externe Netzwerke über eine Schnittstelle zugreifbar. Damit kann der Automatisierungsgrad des Verfahrens nochmals erhöht werden. Darüber hinaus kann auch das Fehlerrisiko verringert werden, indem eine automatische Datenakquisition erfolgt, wobei aber sichergestellt ist, dass firmenspezifische Prozesse und Gegebenheiten adäquat repräsentiert sind.

Nach dem Einlesen der Daten werden die eingelesenen Daten in Schritt 2 vorverarbeitet. Dabei wird ein Identifikationsschlüssel für die jeweiligen Datenobjekte 10 erzeugt und die Datenobjekte 10 werden in verbessertem Format gespeichert. Hier werden beispielsweise Schreibfehler identifiziert und korrigiert. Ebenso ist es möglich, unvollständige Objektbezeichner automatisch zu vervollständigen.

In einem nächsten Schritt 3 erfolgt ein Parsen der eingelesenen Objekte 10. Nach diesem Schritt stehen also ein Identifikationsschlüssel und ein n-Tripel für jedes Objekt 10 bereit. Das n-Tripel umfasst gemäß einer bevorzugten Ausführungsform folgende Angaben zu Entität, Position und Klasse des Objektes 10.

Durch das Parsen der eingelesenen Objekte 10 wird die technische Voraussetzung für folgende weitere Verfahrensschritte geschaffen:
- Identifikation der strukturierungsrelevanten Objekte 10,
- Merkmalsextraktion und
- Elimination von Füllwörtern und nichtrelevanten Objekten 10 bzw. Elementen.

Das Parsen erfolgt mit unterschiedlichen Techniken und umfasst insbesondere ein lexikalisches Parsen, eine Mustererkennung und den Zugriff auf lokale, instanzen-spezifische Grammatiken. In einer komplexeren Ausführungsform kann noch eine Optimierung des Parsers vorgesehen sein, indem Stammdaten des Unternehmens I analysiert und darin typische Muster, Nomenklaturen oder sonstige Pattern identifiziert werden.

Bei diesem Verfahrensschritt (Parsen) werden also die Objekte 10 als Bedeutungsträger in einem das Informationsobjekt repräsentierenden String (der in der Regel im Textformat vorliegt) identifiziert und zur Strukturierung und Klassifikation herangezogen. Dabei ist es möglich, dass gleichwertige Bedeutungsträger zu Synonymgruppen zusammengefasst werden.

In einem nachfolgenden Verfahrensschritt 4 wird ein Evaluierungs- und Selektionsalgorithmus angewendet. Der Selektionsalgorithmus erfolgt auf Basis der technischen Norm. In den Selektionsalgorithmus fließen also die technischen Gegebenheiten, insbesondere auch unternehmens-spezifische Gegebenheiten ein. Mit anderen Worten können hier unternehmens-spezifische Standards, Vorgaben und Regeln angewendet werden.

In einem nachfolgenden Verfahrensschritt 5 wird die technische Metrik generiert. Bei der technischen Metrik handelt es sich um ein semantisches Netz, das Abstandsbeziehungen zwischen den Objekten in Bezug auf deren technische Zusammenhänge umfasst. Das Erstellen des semantischen Netzes bzw. der technischen Metrik erfolgt iterativ in mehreren Durchgängen. Sobald neue Objekte 10, neue Regeln oder neue Sachverhalte in das System eingebracht werden, kann ein neuer Durchlauf zur Erstellung der technischen Metrik angestoßen werden. Vorzugsweise erfolgt dies automatisch. Mit diesem Schritt werden also die Objekte als Bedeutungsträger mit deren technischen Relationen untereinander verknüpft. Die technische Metrik gibt also universell zwischen den technischen Objekten 10 bestehende Relationen wieder. Dabei geht ein wesentlicher Anteil der Relationen über eine bloße semantische Relation hinaus und berücksichtigt explizit technische und naturwissenschaftliche Sachverhalte der jeweiligen Instanz I, die insbesondere in ihrer Ausprägung und Gewichtung firmenspezifisch sind.

Sobald die technische Metrik in Form des semantischen, technischen Netzes generiert worden ist, ist es in einer komplexeren Ausführungsform möglich, das Ergebnis schematisch auf einer Benutzeroberfläche BO anzeigen zu lassen, damit der Benutzer einen Überblick über die generierte Datenstruktur DS erhält.

In einem nachfolgenden Verfahrensschritt 6 erfolgt eine Clusterbildung innerhalb der technischen Metrik. Hier wird eine vordefinierbare Anzahl von Objekten 10 zu disjunkten Clustern zusammengefasst. Dabei können über eine Benutzer-Schnittstelle noch weitere Parameter für die Clusterbildung eingelesen werden. Die Parameter umfassen beispielsweise die semantische Distanz und die Anzahl der Cluster, sowie eine Anzahl von maximalen Objekten 10, die einem Cluster zugeordnet werden. Natürlich können hier noch weitere Parameter definiert werden. Ebenso ist es möglich, dass die Parameter über eine weitere Schnittstelle aus anderen Systemen eingelesen werden. Mit der Clusterbildung wird also eine zusätzliche Gruppierung von Objekten 10 innerhalb der erzeugten Datenstruktur DS erreicht. Auch ist es möglich, dass für die aus dem semantischen Netz bzw. aus der technischen Metrik gebildeten Cluster bestimmte Schwellenwerte definiert werden. Objekte 10, die außerhalb des Schwellenwertes liegen, können zugeordnet werden, indem das Objekt 10 dem Cluster zugewiesen wird, zu dessen Zentrum es die geringste semantische Distanz bzw. die größte semantische Ähnlichkeit aufweist. Dabei werden instanzen-spezifische Regeln aus der Regeldatenbasis 12 berücksichtigt.

In dem in Fig. 2 als letzten Schritt dargestellten Verfahrensschritt 7 erfolgt eine schematische Darstellung der technischen Metrik auf einer grafischen Benutzeroberfläche BO (wie dies bereits vorstehend erwähnt worden ist). In einer bevorzugten Ausführungsform ist es möglich hier zusätzlich ein Navigationsmittel bereitzustellen, mit dem der Anwender die Möglichkeit erhält, in der generierten Datenstruktur DS zu navigieren, um bestimmte Objekte 10 oder Sub-Objekte zu identifizieren und auf diese zuzugreifen.

Ein wesentlicher Vorteil der erfindungsgemäßen Lösung ist darin zu sehen, dass das Verfahren grundsätzlich unabhängig von der jeweils verwendeten Sprache für die Objekte 10 ist. Da die Datenstruktur DS jeweils neu generiert wird, kann sie auch für andere Sprachen generiert werden. Alternativ ist es möglich, eine einmal generierte Datenstruktur DS durch einen Übersetzungsvorgang in andere Sprachen zu übertragen. Üblicherweise ist es vorgesehen, dass die jeweils verwendete Sprache für das Objekt 10 zusätzlich dokumentiert ist. Dies kann beispielsweise als Eintrag in einem kleinen Fenster auf der Bildschirmoberfläche BO erscheinen, der auf einen Mausklick hin aktiviert wird.

Gemäß einer bevorzugten Ausführungsform ist die erzeugte Datenstruktur DS standard-konform, insbesondere nach einem vorkonfigurierbaren DIN-Standard. Alternativ können hier selbstverständlich auch andere Normen und Vorgaben berücksichtigt werden, die unternehmens- oder branchenspezifisches Wissen abbilden.

In einer Ausführungsvariante ist das erfindungsgemäße System und Verfahren als verteiltes System implementiert und kann auf unterschiedlichen computer-gestützten Arbeitsplätzen angewendet werden, die in Datenaustausch miteinander stehen. Darüber hinaus ist es möglich, unterschiedliche Formen für die Eingabe der Daten vorzusehen, wie z. B. eine Spracheingabe oder eine Eingabe in Textform. Darüber hinaus ist es möglich, eine Datenkonvertierung vorzusehen, um unterschiedliche Datenformate in ein einheitliches Datenformat zu überführen, das dann weiterverarbeitet werden kann.

Wie bereits vorstehend erwähnt, ist die hauptsächliche Ausführungsform der Erfindung darauf gerichtet, eine Datenstruktur aus einer unstrukturierten Menge von komplexen technischen Einzelbauteilen (z. B. von Stücklisten für elektronische Bauteile oder für Produkte im Bereich des Maschinenwesens) neu zu erstellen. Eine alternative Ausführungsvariante sieht vor, dass die Datenstruktur DS nicht neu erstellt wird, sondern dass eine bereits bestehende Datenstruktur DS so modifiziert wird, dass sie die technischen Gegebenheiten möglichst adäquat abbildet. Damit wird eine bereits bestehende Datenstruktur DS in eine optimierte, besser angepasste Datenstruktur DS' überführt. Die in der Datenstruktur DS strukturierten Objekte 10 werden anhand des Verfahrens nochmals neu klassifiziert, wobei die Zuordnung anhand der technischen Metrik bzw. aufgrund der semantischen Distanz zu den Schwerpunkten aller existierenden Klassen und durch Zuordnung in die Klasse mit der geringsten Distanz erfolgt.

In einer weiteren Ausführungsvariante der Erfindung ist die Einbindung des Anwenders vorgesehen. Der Anwender kann dann entsprechende Eingaben tätigen, um eine veränderte Steuerung des Datenstruktur-Erstellungsprozesses zu initiieren. Dafür wird die gemäß dem Verfahren erstellte Datenstruktur DS auf der Benutzeroberfläche BO in schematischer Weise (als Prinzipdarstellung) dargestellt. Hier können auch Cluster (z. B. durch hervorgehobene Darstellung) dargestellt werden. Ist der Anwender nun bei Darstellung eines Clusters auf der Benutzeroberfläche BO der Auffassung, dass dieses Cluster vollständig ist und diesem keine weiteren Objekte 10 zugefügt werden sollen, so kann er durch eine entsprechende Benutzereingabe diesen Cluster als "erledigt" erklären und somit blockieren. Dementsprechend können dann im weiteren Verlauf des Verfahrens keine weiteren Objekte 10 diesem Cluster zugewiesen werden. Im Laufe einer weiteren Anwendung des Verfahrens oder bei weiterer Iteration durch das Verfahren werden neue Objekte 10 nur den "nicht erledigten" Clustern zugeführt. Für die Cluster-Analyse kann ein neuronales Netz verwendet werden.

Als weiteres Optimierungskriterium kann das Verfahren zusätzlich auf ein stochastisches Modul zugreifen, das dazu bestimmt ist, Vorkommenshäufigkeiten von Objekten 10 zu zählen und diese nach statistischen Verfahren zum Zwecke des Aufbaus der technischen Metrik auszuwerten. An dieser Stelle sei jedoch darauf hingewiesen, dass das erfindungsgemäße Verfahren grundsätzlich nicht auf der Anwendung eines statistischen Verfahrens basiert. Die Nutzung von statistischen Daten ist nur fakultativ und stellt insofern einen Vorteil dar, als die technische Metrik damit schneller und effizienter generiert werden kann.

Um an dieser Stelle den Unterschied zum Stand der Technik nochmals hervorzuheben, sei hier beschrieben, wie eine Klassifizierung von Objekten in eine bereits bestehende Datenstruktur nach Verfahren aus dem Stand der Technik ausgeführt wird. Dabei wird eine Klassenstruktur bereits vorgegeben. Die zu strukturierenden Elemente werden dann in Hinblick auf bestimmte Merkmale analysiert. Daraufhin wird ein fester Regelsatz angewendet, etwa in der Art: "wenn Merkmal x -> dann Klassifizierung in Klasse y". Die Zuordnung in eine Klasse, die Klassifizierung, ist also im Stand der Technik merkmalsgetrieben. Im Unterschied dazu basiert die vorliegende Erfindung nicht auf einer merkmals-basierten Klassifikation. Gemäß der vorliegenden Anmeldung wird das Objekt 10 selbst analysiert und es werden die Beziehungen zwischen den Objekten 10 verwendet, um semantische Relationen zwischen den Objekten 10 zu generieren. Fakultativ können dabei auch zusätzliche Merkmale verwendet werden. Erfindungsgemäß wird die Klassenstruktur also jeweils neu erzeugt aus den Objekten 10 und den Beziehungen zwischen den Objekten 10 untereinander, sowie auch zwischen den Beziehungen zwischen den Objekten 10 und übergeordneten Objektgruppen. Für die Zuordnung eines Objektes 10 in eine Datenstruktur-Klasse wird die semantische Distanz des einzuordnenden Objektes 10 zu den anderen Objekten 10 in der gleichen Datenstruktur-Klasse gemessen. Falls die gemessene semantische Distanz eine vordefinierbare Schwelle unterschreitet, wird das Objekt 10 in diese Datenstruktur-Klasse eingeordnet, anderenfalls wird das Verfahren wiederholt, um eine besser passende Datenstruktur-Klasse zu finden.

Ein Vorteil der erfindungsgemäßen Lösung ist darin zu sehen, dass es aufgrund der dynamischen Klassifizierung möglich ist, die zu erstellende Datenstruktur DS an spezifische, technische Bedingungen zu berücksichtigen und eine diesbezügliche Anpassung zu erreichen.

Gemäß einer bevorzugten Ausführungsform können die technischen Beziehungen zwischen den Objekten 10 insbesondere konstruktive Beziehungen und/oder funktionale Beziehungen sein. Beispiele für konstruktive Beziehungen sind: "A ist Bestandteil von B", "A ist Zubehör für B". Beispiele für funktionale Beziehungen sind: "A erfüllt die Funktion B", "A ist Prüfmethode für Bauteil B". Vorzugsweise werden jedoch noch weitere Beziehungen repräsentiert, wie z. B.:
- "A ist gefertigt aus Material B",
- "A ist oberflächenbearbeitet mit B",
- "A ist Fertigungsverfahren für B",
- "A ist Standard für B",
- "A ist DIN-Norm oder andere Norm für B"
- "A ist Anforderung für B",
- "A ist physikalische Einheit für B",
- "A ist chemische Formel für B",
- "A ist Typenbezeichnung für B",
- "A ist Herstellerfirma von B", etc.

Gemäß einer bevorzugten Ausführungsform steht das Verfahren bzw. das erfindungsgemäße System mit anderen Systemen, wie z. B. mit ERP-Systemen und PDM-Systemen, in Datenaustausch.

### Bezugszeichenliste:

- I: Instanz
- 8: technisches Bauteil
- 10: Objekt
- 12: Regeldatenbank
- 14: Strukturierungseinheit
- DS: Datenstruktur
- BO: Benutzeroberfläche
- DB: Datenbank

## Patentansprüche

1. Verfahren zur Analyse von Daten mittels eines Computers zum automatisierten Neu-Erstellen einer Datenstruktur (DS) für informationstechnologische Objekte (10), wobei die Objekte (10) technische Bauteile (8) aus dem Produktionswesen repräsentieren und einer Instanz (I) zugeordnet sind und in zumindest einer Datenbank (DB) gespeichert sind, mit folgenden Verfahrensschritten:
- Erfassen der zu strukturierenden Objekte (10) über eine Schnittstelle;
- Parsen der erfassten Objekte (10);
- Erstellen von technischen Relationen zwischen den geparsten Objekten
- Messen einer Distanz zwischen den Objekten (10) basierend auf den technischen Relationen zum Aufbau oder zur Modifikation einer bestehenden technischen Metrik, um die Datenstruktur (DS) zu erstellen, wobei die technischen Relationen auf instanzen-spezifischen Regeln für die technischen Bauteile (8) basieren.

2. Verfahren nach Anspruch 1, **dadurch gekennzeichnet, dass** das Verfahren automatisch ausgeführt wird, und dass insbesondere das Erfassen, das Parsen und das Messen automatisch ausgeführt werden.

3. Verfahren nach zumindest einem der vorhergehenden Patentansprüche, wobei aus der technischen Metrik automatisch Objektklassen ableitbar sind und/oder dass automatisch eine Hierarchie von Objekten (10) und/oder von Objektklassen aufgebaut werden kann.

4. Verfahren nach zumindest einem der vorhergehenden Patentansprüche, **dadurch gekennzeichnet, dass** die technische Metrik in einem elektronischen Speicher abgelegt ist.

5. Verfahren nach zumindest einem der vorhergehenden Patentansprüche, **dadurch gekennzeichnet, dass** aus der technischen Metrik technische Cluster, insbesondere iterativ mit sukzessiver Anpassung von Parametern, berechnet werden.

6. Verfahren nach zumindest einem der vorhergehenden Patentansprüche, **dadurch gekennzeichnet, dass** das Verfahren eine Ähnlichkeitsanalyse auf Basis der technischen Metrik umfasst.

7. Verfahren nach zumindest einem der vorhergehenden Patentansprüche, **dadurch gekennzeichnet, dass** das Verfahren automatisch Objektdubletten identifiziert.

8. Verfahren nach zumindest einem der vorhergehenden Patentansprüche, **dadurch gekennzeichnet, dass** auf Basis der technischen Metrik eine Distanz zwischen allen oder ausgewählten Objekten (10) gemessen wird.

9. Verfahren nach zumindest einem der vorhergehenden Patentansprüche, **dadurch gekennzeichnet, dass** die Objekte (10) hinsichtlich ihrer Bedeutung in Bezug auf die technische Metrik für die Instanz (I) priorisiert werden, und dass eine Distanz und/oder eine Priorisierung instanzen-spezifisch sind.

10. Verfahren nach zumindest einem der vorhergehenden Patentansprüche, **dadurch gekennzeichnet, dass** eine Benutzer-Schnittstelle bereitgestellt wird, über die ein Anwender Eingaben in Text-, Sprach- oder in anderen Formaten eingeben kann, insbesondere Parameter für eine Distanz und/oder für eine Anzahl der Cluster und/oder für instanzen-spezifische Regeln.

11. Verfahren nach zumindest einem der vorhergehenden Patentansprüche, **dadurch gekennzeichnet, dass** das Verfahren eine Selektion umfasst, die bestimmte Objekte (10) für den Aufbau der technischen Metrik nach vordefinierbaren Kriterien auswählt.

12. Verfahren nach zumindest einem der vorhergehenden Patentansprüche, **dadurch gekennzeichnet, dass** die technische Metrik dynamisch erweiterbar ist.

13. Verfahren nach zumindest einem der vorhergehenden Patentansprüche, **dadurch gekennzeichnet, dass** eine Benutzer-Schnittstelle (BO) zur Darstellung der technischen Metrik bereitgestellt wird, wobei die technische Metrik insbesondere grafisch in Form eines gerichteten Graphen darstellbar ist.

14. Verfahren nach zumindest einem der vorhergehenden Patentansprüche, **dadurch gekennzeichnet, dass** das Verfahren iterativ angewendet wird.

15. Verfahren nach zumindest einem der vorhergehenden Patentansprüche, **dadurch gekennzeichnet, dass** die technischen Relationen auf einer technischen Norm oder einem technischen Standard basieren.

16. Anwendung eines Verfahrens nach einem der vorstehenden Verfahrensansprüche zur Steuerung des Zugriffs auf Objekte (10) und/oder zur Speicherung von Objekten (10) in einem Speicher oder in einer Datenbank (DB).

17. Anwendung eines Verfahrens nach einem der vorstehenden Verfahrensansprüche zur Bereinigung und/oder Korrektur eines Datenbestandes von Objekten (10) in einer bestehenden Klassifikationsstruktur.

18. System zur Analyse von Daten mittels eines Computers zum automatisierten Neu-Erstellen einer Datenstruktur (DS) für informationstechnologische Objekte (10), die technische Bauteile (8) aus dem Produktionswesen repräsentieren und wobei die Objekte (10) einer Instanz (I) zugeordnet sind und wobei der Computer zur Ausführung eines Verfahrens nach zumindest einem der vorhergehenden Verfahrensansprüche ausgebildet ist, mit:
- einer Strukturierungseinheit (14), die zur Klassifizierung der Objekte und zur Neu-Erstellung der
- Datenstruktur (DS) in Form einer technischen Metrik bestimmt ist;
- einer Datenbank (DB), in der die zu strukturierenden Objekte (10) abgelegt sind;
- einer Messeinheit zur Messung einer Distanz zwischen den Objekten (10) und
- einer Schnittstelle zur Darstellung der technischen Metrik mit den gemessenen technischen Relationen.

19. Computerprogramm, das auf einem Datenträger gespeichert werden kann und ausgebildet ist, um ein Verfahren nach zumindest einem der vorhergehenden Verfahrensansprüche auszuführen, falls das Programm auf einem Computer ausgeführt wird.
